# FASCICULE DE BREVET EUROPEEN

(11) **EP 2 927 560 B1**
(45) Date de publication et mention de la délivrance du brevet: **04.05.2016**
(21) Numéro de dépôt: 15152858.5
(22) Date de dépôt: 28.01.2015
(51) Int. Cl.: F21K 99/00, A61B 1/00, A61B 1/06, F21V 9/16, F21S 8/04, F21V 8/00

(54) **Appareil d'éclairage opératoire à source laser déportée**
Operationsleuchte mit versetzter Laserquelle
Surgical lighting apparatus with offset laser source

(30) Priorité: 04.04.2014 FR 1452995
(43) Date de publication de la demande: 07.10.2015
(73) Titulaire: Maquet SAS, 45160 Ardon (FR)
(72) Inventeur: Desouches, Jérôme, 45000 Orleans (FR); Peyras, Gabriel, 45200 Orleans (FR); Valteau, Cécilia, 45240 Ligny le Ribault (FR)
(74) Mandataire: Prugneau, Philippe

(56) Documents cités:
- EP-A1- 2 245 978
- EP-A2- 2 030 560
- EP-A2- 2 074 934
- WO-A1-01/40702
- DE-A1-102010 039 683
- US-A1- 2011 176 290
- US-A1- 2011 243 510
- US-A1- 2013 335 989

## Description

### Domaine technique

Le domaine de l'invention concerne les appareils d'éclairage, en particulier les appareils d'éclairage opératoire pour éclairer un champ opératoire médical.

### Technique antérieure

En milieu médical, notamment en bloc opératoire, les conditions d'éclairage doivent apporter un maximum de confort pour que le chirurgien ou le médecin puisse travailler correctement.

En particulier, un bon éclairage doit se conformer à certaines normes et fournir une lumière présentant un indice de rendu des couleurs (IRC ou Ra) compris entre 85 et 100 ainsi qu'une température de couleur comprise entre 3000 degrés Kelvin (K) et 6700K.

Plus précisément, on désigne ici par « température de couleur » d'une lumière, la température de couleur équivalente évaluée de manière classique à partir des coordonnées chromatiques (x,y) du spectre de la lumière dans un diagramme chromatique de la Commission Internationale de l'Eclairage.

En outre, en milieu médical, un bon éclairage doit permettre au chirurgien de faire varier la température de couleur pour l'adapter à son besoin.

De plus, pour améliorer le confort, le dégagement de chaleur de l'appareil d'éclairage au dessus du champ opératoire doit être contrôlé. Pour ce faire dans la tête d'éclairage une ventilation peut être nécessaire pour dissiper la chaleur produite par la source lumineuse par exemple.

Cette approche induit une augmentation du volume de la tête d'éclairage et complexifie la structure de la tête d'éclairage. Pour éliminer les sources de chaleur générées par les systèmes conventionnels et alléger les dispositifs d'éclairage, les sources lumineuses peuvent alors être déportées en dehors des têtes d'éclairage.

Néanmoins dans cet agencement la lumière émise par la source lumineuse doit être conduite jusqu'à la tête d'éclairage avec un bon rendement optique.

Enfin, un bon éclairage médical et le confort du chirurgien dépendent aussi d'autres caractéristiques telles qu'une bonne homogénéité de la lumière, un niveau d'éclairement maximum dans l'axe d'éclairement du champ opératoire, de pouvoir faire varier le diamètre de la tache d'éclairement, d'éviter de générer des ombres colorées et enfin de réguler la lumière en cas de présence d'obstacle dans le champ d'éclairage.

Actuellement, il est connu différents types de dispositifs d'éclairage répondant en partie à ces exigences qui par exemple mélangent des sources de lumière blanche pour obtenir une lumière d'éclairage de température de couleur variable, ou des appareils d'éclairage avec une source de lumière déportée pour alléger les têtes d'éclairage.

On connait d'ailleurs du document FR 2988806 un dispositif d'éclairage à sources de lumière à LEDs blanches et avec des fibres optiques regroupées dans un harnais pour conduire en sortie d'éclairage une lumière blanche homogène, ayant une température de couleur modulable sans créer d'ombres colorées dans le champ opératoire.

Néanmoins, en utilisant des LEDs comme sources lumineuses, de part leur taille, liée à un flux lumineux important à générer, ce type de dispositif implique d'utiliser des faisceaux de fibres optiques de gros diamètre, impliquant un harnais de fibres optiques volumineux difficilement intégrable dans les supports articulés d'appareil d'éclairage.

De plus les LEDs émettant des rayonnements non directifs, on doit gérer des pertes lumineuses dans les fibres optiques. Enfin il est reconnu que les LEDs perdent en efficacité de flux lumineux au cours du temps ce qui nécessite une maintenance fréquente et couteuse.

### Exposé de l'invention

Le but de l'invention est de remédier à tous ces inconvénients. L'idée à la base de l'invention est d'utiliser une source de lumière déportée à rayonnement laser.

Plus particulièrement, l'invention a donc pour objet un appareil d'éclairage opératoire comprenant au moins deux sources de lumière, une tête d'éclairage déportée des sources de lumière et un guide de lumière sous forme de harnais de fibres optiques avec au moins un faisceau de tête de fibres optiques couplé aux sources de lumière et une pluralité de sorties d'éclairage dans la tête d'éclairage pour conduire la lumière des sources de lumière vers la tête d'éclairage, caractérisé en ce que le harnais de fibres optiques peut comprendre deux faisceaux de tête et l'appareil d'éclairage peut comprendre deux sources de lumière émettant un rayonnement lumineux laser, les deux sources de lumière laser étant couplées respectivement aux deux faisceaux de tête de fibres optiques, et en ce que un premier élément de phosphore d'un premier type et un second élément de phosphore d'un second type peuvent être interposés entre les faisceaux de sortie de fibres optiques et les sorties d'éclairage de sorte que dans chaque sortie d'éclairage on peut produire un premier faisceau de lumière blanche à une première température de couleur et un seconde faisceau de lumière blanche à une seconde température de couleur différente de la première température de couleur.

Avec cet agencement on peut utiliser des faisceaux de fibres optiques de très faible diamètre et de grande longueur adaptées au rayonnement concentré et homogène d'une source laser. Un harnais de telles fibres optiques de faible diamètre peut facilement s'intégrer dans un support articulé et/ou télescopique pour lampe opératoire.
L'appareil d'éclairage selon l'invention peut présenter avantageusement les particularités suivantes :
- il peut comprendre un moyen d'alimentation électrique qui est adapté pour fournir aux deux sources de lumière laser des courants respectifs ayant des intensités différentes de sorte à produire en sortie de la tête d'éclairage une lumière blanche de température de couleur variable ;
- un moyen optique peut être agencé dans la tête d'éclairage pour former avec la lumière blanche une tache d'éclairement de taille variable ou non sur le champ opératoire ;
- le moyen optique peut comprendre un diviseur de faisceau pour diviser le premier faisceau de lumière blanche à la première température de couleur et le deuxième faisceau de lumière blanche à la seconde température de couleur en un faisceau de lumière transmis et un faisceau de lumière réfléchi de sorte que les deux faisceaux de lumière blanche de températures de couleur différentes soient mélangés pour former deux faisceaux de lumière blanche avec une même température de couleur intermédiaire entre la première et la seconde température de couleur, le moyen optique permettant de combiner les faisceaux de lumière blanche à la température de couleur intermédiaire suivant une certaine configuration de superposition dans un plan de superposition où est formée la tache d'éclairement, et de modifier la dimension de la tache d'éclairement à la température intermédiaire ;

- chaque source de lumière laser peut comprendre une ou plusieurs diodes lasers ;
- chaque élément phosphore peut être intégré dans une férule de fibres optiques ;
- chaque élément phosphore peut être agencé sur une des faces d'une optique de focalisation présente dans la tête d'éclairage ;
- le moyen optique peut être composé en partie ou intégralement par une lentille liquide à focale variable ;
- la lentille liquide à focale variable peut être alimentée par un moyen d'alimentation électrique qui module un courant électrique de sorte de faire varier la focale ;
- la variation de la focale de la lentille liquide à focale variable est avantageusement apte à moduler l'angle du faisceau de lumière en sortie du système optique pour modifier la dimension de la tache d'éclairement au niveau du champ opératoire.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés dans lesquels :
- la figure 1 est une vue schématique en perspective d'un appareil d'éclairage selon l'invention
- la figure 2 est une vue très schématique d'un appareil d'éclairage selon l'invention avec deux sources de lumière laser
- la figure 3 est une vue très schématique d'un appareil d'éclairage selon l'invention avec un harnais de fibres optiques
- la figure 4 montre l'extrémité d'une fibre optique en sortie d'éclairage avec un élément de phosphore
- la figure 5 est un spectre de la source de lumière en sortie d'éclairage avant et après avoir traversé l'élément phosphore
- la figure 6 est une représentation schématique de l'appareil d'éclairage selon l'invention exploitant un diviseur de faisceaux pour la formation d'une tache d'éclairement à température de couleur variable

### Description d'un exemple de réalisation

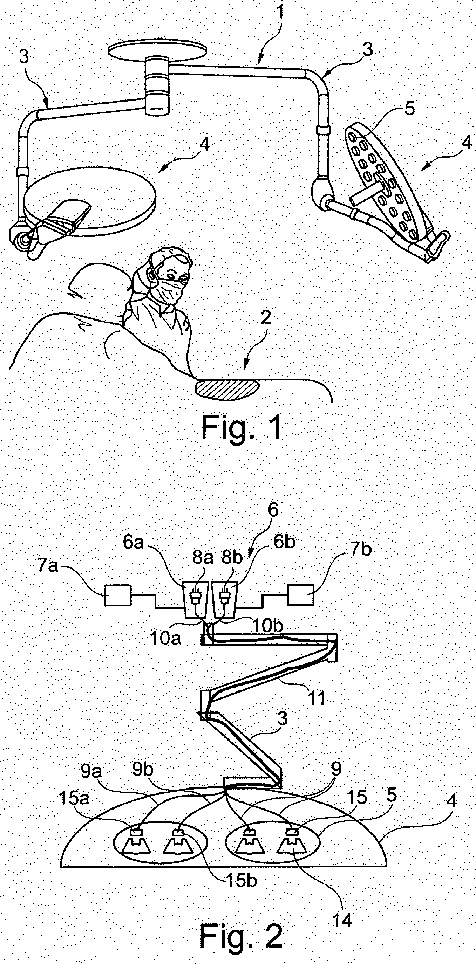

Sur la figure 1, on a illustré un appareil d'éclairage opératoire 1 selon l'invention éclairant un champ opératoire 2 dans une salle opératoire.

L'appareil d'éclairage 1 est ici du type suspendu au plafond de la salle opératoire et comprend dans le cas d'exemple deux bras de suspension 3 articulés portant chacun une tête d'éclairage 4 en forme de coupole.

Le champ opératoire 2 peut être situé entre 0.8m et 1.6m de la tête d'éclairage.

Comme visible sur la figure 1, chaque tête d'éclairage 4 peut présenter une pluralité de sorties d'éclairage 5.

Une particularité de cet appareil d'éclairage est que chaque tête d'éclairage 4 est déportée de la source de lumière qui peut se trouver dans le système d'accroche au plafond ou encore par exemple dans une autre salle à côté de la salle opératoire.

Une autre particularité de cet appareil d'éclairage est la source lumineuse qui est une source de lumière laser, la lumière laser étant guidée vers la coupole par un guide de lumière ici à fibres optiques qui peuvent être disposées à l'intérieur du capotage des bras articulés 3.

On a représenté sur la figure 2 l'appareil d'éclairage 1 avec plusieurs sources de lumière laser 6, un bras articulé 3 et une tête d'éclairage 4.

Dans le cas d'exemple, il comprend deux sources de lumière 6a et 6b comprenant respectivement une diode laser 8a et une diode laser 8b, émettant chacune un rayonnement laser. On pourrait avoir plus de deux diodes laser pour augmenter la puissance de l'éclairage.

Les deux diodes lasers sont couplées respectivement ici à deux faisceaux de tête 10a et 10b de fibres optiques d'un harnais 11 de fibres optiques.

Les fibres optiques des deux faisceaux de tête 10a et 10b sont brassées dans le harnais 11 de fibres optiques puis sont réparties par la suite dans la tête d'éclairage 4 dans une pluralité de faisceaux de sortie 9 de fibres optiques. Un élément de phosphore 15 est placé à la sortie de chaque faisceau de sortie de fibres optiques tel que 9a ou 9b, pour être traversé par le rayonnement laser conduit dans ce faisceau de sortie de fibres optiques et générer en sortie une lumière blanche.

Dans une sortie d'éclairage 5, les fibres optiques de chaque faisceau de sortie peuvent être couplées à un moyen optique de focalisation 14 comme par exemple une lentille, un collimateur, ou encore une lentille liquide à focale variable.

Selon encore l'invention, les diodes lasers 8a et 8b peuvent être alimentées en courant par un moyen d'alimentation électrique agencé pour fournir de façon séparée aux diodes lasers 8a, 8b des courants d'intensités différentes.

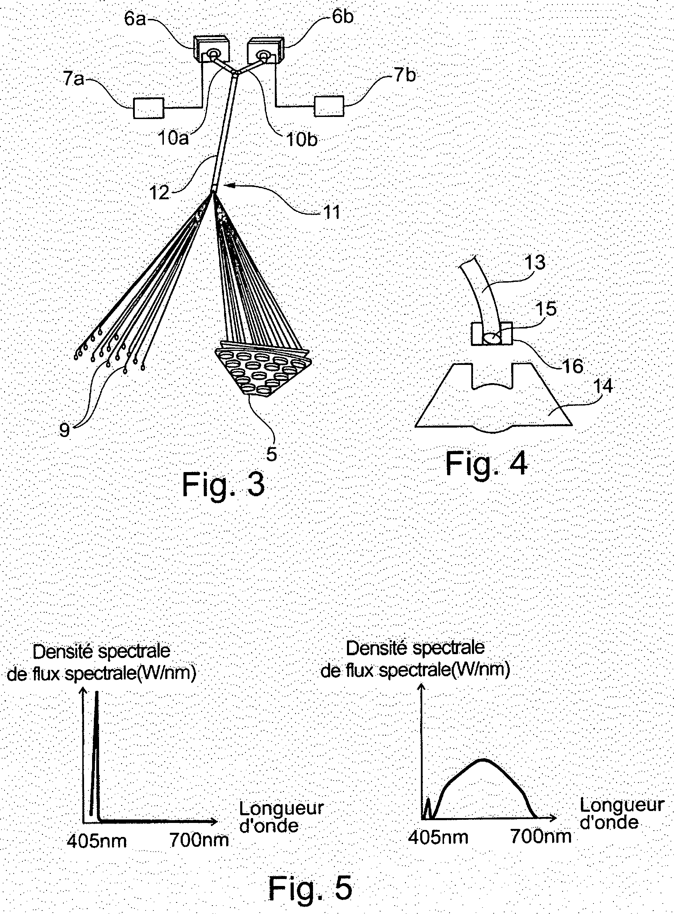

Le moyen d'alimentation électrique peut se présenter sous la forme d'une alimentation électrique unique ou alors sous la forme de deux alimentations électriques 7a, 7b comme illustré sur la figure 2. La figure 3 illustre un brassage particulier des fibres optiques des deux faisceaux de tête 10a et 10b dans le corps 12 du harnais 11. Il consiste en une répartition homogène des fibres, chaque faisceaux de sortie 9 comportant des fibres optiques provenant en même proportion des deux faisceaux de tête 10a, 10b, c'est-à-dire un nombre égal de fibres optiques provenant pour une moitié du faisceau de tête 10a et pour une autre moitié du faisceau de tête 10b.

Par exemple à partir des deux faisceaux de tête 10a, 10b, deux groupes de seize faisceaux de sortie 9 peuvent équiper deux tête d'éclairage 4 ou deux portions de tête d'éclairage 4.

La figure 4 illustre une extrémité de sortie d'une fibre optique et à proximité de cette sortie un élément de phosphore 15 qui est déposé dans la férule 16 de la fibre optique de manière à être traversé par le rayonnement laser. L'élément de phosphore 15 est alors excité par le rayonnement laser et convertit le faisceau lumineux laser en un faisceau de lumière blanche.

Ce phosphore est choisi tel que les propriétés colorimétriques de la lumière blanche produite satisfassent aux contraintes normatives de l'éclairage opératoire. L'élément phosphore 15 peut se présenter sous la forme d'un film posé sur un support en verre, l'épaisseur du film pouvant être de l'ordre de 1 mm à 2 mm. Par ailleurs cette épaisseur peut être irrégulière afin de garantir une homogénéité en coordonnées chromatiques de la lumière résultante en fonction de l'angle d'émission.

On peut utiliser un mélange de trois phosphores rouge (émettant entre 600 et 700nm), vert (émettant entre 500 et 600 nm) et bleu (émettant entre 400 et 500 nm), le phosphore rouge étant par exemple à base de Nitrite, le phosphore vert par exemple à base de silicate, et le phosphore bleu par exemple à base de Cérium(III). Lorsque la longueur d'onde du laser est supérieure à 420nm, on peut aussi utiliser deux ou trois types de phosphores à base de YAG (Yttrium Aluminium Garnet) dopé au Cérium(III), chacun des phosphores ayant un pic d'émission distinct, entre 500nm et 700 nm.

Les éléments de phosphore peuvent par exemple être aussi du type RadiantFlex™. Il est entendu que la surface sur laquelle est déposé l'élément phosphore doit laisser passer le faisceau de lumière.

Avantageusement, le support sur lequel le phosphore est déposé peut avoir un traitement couche mince qui lui confère la propriété suivante : les rayonnements inférieurs 460 nm sont transmis par le support, alors que les rayonnements supérieurs à 460nm sont réfléchis. Ce traitement permettra de laisser passer l'excitation du laser tout en réfléchissant la lumière émises par le phosphore en direction de la fibre optique. Ainsi, le rendement du système est amélioré car la lumière émise par le phosphore dans la direction opposée au champ d'éclairage n'est pas perdue.

Le support sur lequel le phosphore est déposé peut également être fixé directement en sortie de la fibre optique par une pièce mécanique maintenant le support et fixé sur la fibre optique. Ainsi, aucun rayonnement laser n'est accessible à l'oeil lors d'un montage ou démontage de l'éclairage.

Le rayonnement laser qui traverse l'élément phosphore 15 a une longueur d'onde d'émission qui est dans le bleu ou proche UV. Les diodes lasers ainsi que des lasers à pompage optique permettent d'émettre ce type de rayonnement.

Sur la figure 5 on a représenté schématiquement un spectre d'une source de lumière laser avant et après avoir traversé un élément de phosphore selon l'invention.

La source de lumière laser émet un rayonnement lumineux entre 350nm et 480nm et de préférence en dessous de 460nm. Lorsque le rayonnement lumineux laser traverse au moins un élément phosphore et l'excite, un faisceau de lumière blanche entre 400 et 800nm est émis.

Un filtre interférentiel ou un verre absorbant peut être ajouté après l'élément phosphore afin de filtrer le pic bleu ou proche UV résiduel qui peut être dangereux pour le personnel.

Les diodes lasers sont avantageusement utilisées car elles émettent des rayons très directifs par rapport aux LEDs par exemple.

Ainsi tous les rayons lumineux émis par les diodes lasers 8a, 8b prennent une direction unique et fournissent une lumière très concentrée en sortie de fibre optique.

Après guidage par le guide de lumière, la distribution de la lumière en sorties d'éclairage reste donc très concentrée. Un autre avantage à utiliser des diodes lasers est que leur diamètre étant petit, le diamètre des fibres optiques associées sera lui aussi très petit et ainsi n'implique pas d'utiliser des harnais de fibres de très grande taille comme pour des LEDs par exemple.

Il est alors possible de mettre en oeuvre l'appareil d'éclairage selon l'invention, avec des sources de lumière à diodes lasers déportées avec guidage de la lumière jusqu'à une tête d'éclairage par des fibres optiques de petit diamètre réunies dans un harnais de fibres optiques très longues, facilement intégrable dans tout type de support d'éclairage opératoire tel que des bras articulés et/ou télescopiques sans engendrer de pertes optiques.

Il est entendu qu'avec des fibres optiques de petit diamètre, le harnais 11 peut comporter plusieurs centaines ou milliers de fibres optiques.

Le nombre de diode laser peut aller de une à plusieurs dizaines, et avantageusement comme elles sont petites et émettent des rayons très directifs, le nombre de diodes laser dans la source lumineuse peut être réduit par rapport à une source lumineuse à LEDs. Une seule diode laser peut aussi alimenter une pluralité de sorties d'éclairage.

Selon l'invention, en se référant à la figure 2, le rayonnement lumineux laser de la première source laser 6a qui arrive sur un faisceau de sortie 9a traverse un élément de phosphore 15a d'un premier type pour convertir la lumière laser en un premier faisceau de lumière blanche F1 ayant une première température de couleur Tk1 et le rayonnement lumineux laser de la seconde source laser 6b qui arrive sur le faisceau de sortie 9b traverse un élément de phosphore 15b d'un second type , c'est-à-dire de composition chimique différente du premier type, pour convertir la lumière laser en un second faisceau de lumière blanche F2 ayant une seconde température de couleur Tk2 différente de la première température de couleur Tk1.

On peut ainsi obtenir en sortie d'éclairage 5 une lumière blanche comprenant un mélange de faisceaux de lumière blanche, ayant une température de couleur intermédiaire Tkr comprise entre la première température de couleur Tk1 et la seconde température de couleur Tk2.

Un flux lumineux total en sortie d'éclairage 5 égal à la somme des flux lumineux respectifs des deux sources 6a, 6b ayant respectivement traversées des éléments de phosphore 15 de composition différente peut alors être focalisé directement sur le champ opératoire par un moyen optique 14. Le moyen optique peut alors être une lentille ou un doublet de lentille(s), un secteur de prismes, un réflecteur, un ou une combinaison de collimateur(s) ou analogue, une lentille liquide à focale variable ou une combinaison de ceux-ci.

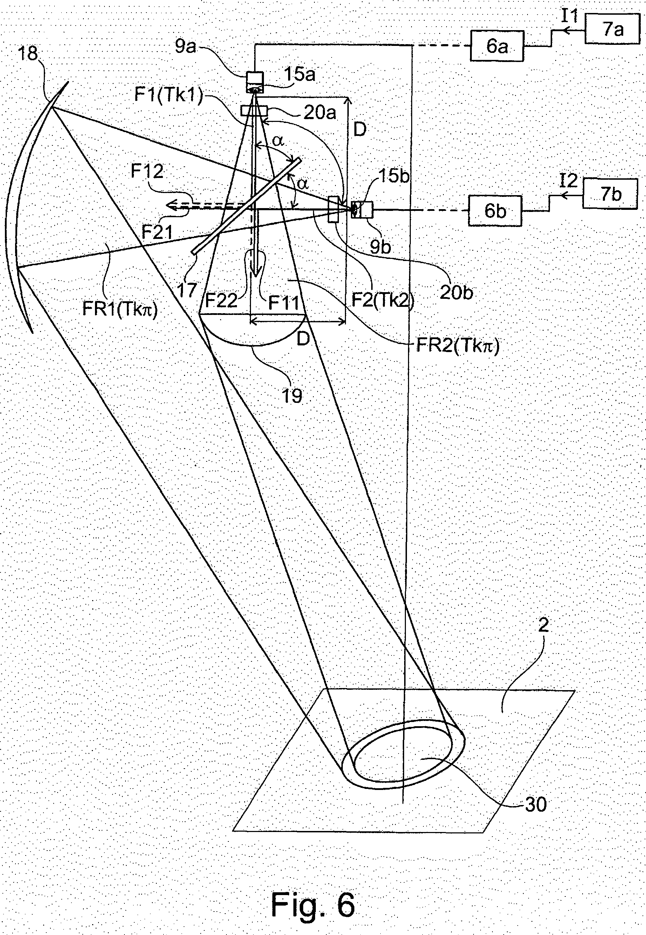

En variante, comme représenté sur la figure 6, le moyen optique 14 est agencé pour mélanger les faisceaux de lumière blanche F1 et F2 avant focalisation pour former une tache d'éclairement 30 sur le champ opératoire 2, tache d'éclairement à dimension et à températures de couleur variables et cela à partir de chaque sortie d'éclairage 5. Pour cela le moyen optique 14 peut comprendre un diviseur de faisceau 17.

La figure 6 illustre notamment dans une sortie d'éclairage, un diviseur de faisceau 17, deux sources de lumière blanche désignées par 9a et 9b (comme pour les faisceaux de sortie) émettant chacune un faisceau de lumière blanche F1 et F2, les deux faisceaux de lumière blanche F1 (schématisé par un double trait continu) et F2 (schématisé par un trait simple continu) ayant respectivement des températures de couleur Tk1 et Tk2 différentes, les sorties de fibre étant disposées de sorte que les axes médians des faisceaux F1, F2 soient orientés à 90° l'un par rapport à l'autre et on comprend donc que ces sorties de fibres optique sont disposées symétriquement par rapport au diviseur de faisceau 17.

Le diviseur de faisceau 17 est apte à diviser chacun des premier et second faisceaux F1, F2 en une première partie de faisceau F11, F21 (schématisées respectivement par un double trait continu et par un trait simple continu) transmis par le diviseur de faisceau 17, et en une seconde partie de faisceau F12, F22 (schématisées respectivement par un double trait pointillé et par un trait simple pointillé) réfléchis par le diviseur de faisceau 17.

On utilise de préférence un diviseur de faisceau 17 permettant de diviser chaque faisceau F1, F2 avec un rendement théorique de 100%, c'est-à-dire sans perte, dont par exemple 50% en réflexion et 50% en transmission ou encore par exemple 30% en réflexion et 70% en transmission.

Le diviseur de faisceau 17 est disposé à égale distance D des sorties des faisceaux de sortie 9a et 9b et forme un même angle α de 45° avec chacun des faisceaux F1, F2. De plus, le diviseur de faisceau 17 et les sorties des faisceaux 9a et 9b sont agencés spatialement de sorte que le premier faisceau F1 et le second faisceau F2 atteignent le diviseur de faisceau 17, à l'opposé l'un de l'autre, de part et d'autre du diviseur de faisceau 17.

Ainsi, la seconde partie F12 du premier faisceau F1 se superpose ou se combine à ladite première partie F21 du second faisceau F2 pour former un premier faisceau résultant FR1 ayant une température de couleur intermédiaire résultante Tkr comprise entre les première et seconde températures de couleur Tk1, Tk2.

De plus, la première partie F11 du premier faisceau F1 se superpose ou se combine à la seconde partie F22 du second faisceau F2 pour former un second faisceau résultant FR2 ayant une même température de couleur résultante Tkr.

En aval de chaque sortie de faisceau 9a et 9b est disposée une lentille 20 qui sert à collimater la lumière blanche sur le diviseur de faisceau 17, les ensembles sortie de faisceau 9a avec sa lentille 20a et sortie de faisceau 9b avec sa lentille 20b étant symétriques par rapport au diviseur de faisceau 17 et placés respectivement à égale distance D de celui-ci.

La sortie d'éclairage 5 permet donc de produire un flux lumineux blanc à une certaine température de couleur Tkr.

Dans une autre variante, une partie du système optique est composé d'une lentille liquide à focale variable. Cette lentille est alimentée en courant par un moyen d'alimentation électrique pour pouvoir moduler la focale de cette lentille. Lorsque cette lentille est positionnée entre le phosphore et un autre composant optique, le changement de focale de la lentille liquide à focale variable permet de moduler l'angle du faisceau arrivant sur le second composant optique, et permet ainsi de moduler le diamètre de tache d'éclairement.

Lorsque la lentille liquide à focale variable est positionnée avant l'élément de phosphore, le changement de focale de la lentille liquide à focale variable permet de moduler l'angle du faisceau arrivant sur l'élément de phosphore et ainsi moduler la taille de la zone de phosphore excitée par le laser, ce qui a pour effet de moduler la taille de la zone émettrice de lumière et donc de moduler le diamètre de tache d'éclairement.

Comme énoncé plus haut, les diodes lasers 8a et 8b sont alimentées en courant par un moyen d'alimentation électrique agencé pour fournir de façon séparée aux diodes lasers 8a, 8b des courants d'intensités I1 et I2 qui peuvent être différentes. Ainsi il est possible de faire varier la température de couleur Tk1, Tk2 et donc Tkr comprise entre Tk1 et Tk2.

Comme encore illustré sur la figure 6, un réflecteur 18 et une lentille 19, ici un réflecteur elliptique, permettent à partir des faisceaux de lumière incidents FR1 et FR2 de former une tache d'éclairement 30 sur le champ opératoire.
On peut aussi placer les sorties des faisceaux de sortie 9a et 9b avec une distance différente par rapport au diviseur de faisceaux 17 pour permettre avec des alimentations en courant séparées pour les diodes 8a, 8b de changer le diamètre de la tache d'éclairement 30.
L'homme du métier saura choisir l'élément de phosphore pour satisfaire aux exigences de l'éclairage opératoire et donc obtenir après conversion, une lumière blanche présentant une température de couleur comprise entre 3000 degrés Kelvin et 6700 degrés Kelvin ; un indice de rendu des couleurs compris entre 85 et 100, de préférence compris entre 90 et 100.

Il va de soi que la présente invention ne saurait être limitée à la description qui précède d'un de ses modes de réalisation, susceptibles de subir quelques modifications sans pour autant sortir du cadre de l'invention.

## Revendications

1. Appareil d'éclairage (1) opératoire comprenant au moins deux sources de lumière (6a, 6b), une tête d'éclairage (4) déportée desdites sources de lumière (6a, 6b) et un guide de lumière sous forme de harnais (11) de fibres optiques avec au moins un faisceau de tête (10a, 10b) de fibres optiques couplé auxdites sources de lumière (6a, 6b) et une pluralité de faisceaux de sortie (9, 9a, 9b) de fibres optiques couplés à une pluralité de sortie d'éclairage (5) dans ladite tête d'éclairage (4) pour conduire la lumière desdites sources de lumière (6a, 6b) vers ladite tête d'éclairage (4), **caractérisé en ce que** ledit harnais (11) de fibres optiques comprend deux faisceaux de tête (10a, 10b) et ledit appareil d'éclairage (1) comprend deux sources de lumière laser (6a, 6b) émettant un rayonnement lumineux laser, lesdites deux sources de lumière laser (6a, 6b) étant couplées respectivement auxdits deux faisceaux de tête (10a, 10b) de fibres optiques, et **en ce qu'**un premier élément de phosphore d'un premier type (15a) et un second élément de phosphore d'un second type(15b) sont interposés entre lesdits faisceaux de sortie (9, 9a, 9b) de fibres optiques et lesdites sorties d'éclairage (5), de sorte que dans chaque sortie d'éclairage (5) on produit un premier faisceau de lumière blanche (F1) à une première température de couleur (Tk1) et un seconde faisceau de lumière blanche (F2) à une seconde température de couleur (Tk2) différente de la première température de couleur (Tk1).

2. Appareil d'éclairage (1) selon la revendication 1, **caractérisé en ce qu'**il comprend un moyen d'alimentation électrique (7) qui est adapté pour fournir auxdites deux sources de lumière (6a, 6b) des courants respectifs ayant une intensité différente de sorte que les sorties d'éclairage produisent une lumière blanche à température de couleur variable.

3. Appareil d'éclairage (1) selon la revendication 2, **caractérisé en ce qu'**un moyen optique (14) est agencé dans ladite tête d'éclairage (4) pour former avec ladite lumière blanche une tache d'éclairement (30) sur un champ opératoire.

4. Appareil d'éclairage (1) selon la revendication 3, **caractérisé en ce que** ledit moyen optique comprend en outre un diviseur de faisceau (17) pour diviser ledit premier faisceau de lumière blanche (F1) à ladite première température de couleur (Tk1) et ledit second faisceau de lumière blanche (F2) à ladite seconde température de couleur (Tk2) en un faisceau de lumière transmis (F11, F21) et un faisceau de lumière réfléchi (F12, F22) de sorte que lesdits deux faisceaux de lumière blanche (F1, F2) de température de couleur différentes (Tk1, Tk2) sont mélangés pour former deux faisceaux de lumière blanche (FR1, FR2) à ladite même température de couleur intermédiaire (Tkr) entre ladite première et ladite seconde température de couleur, ledit moyen optique (14) permettant de combiner les faisceaux de lumière blanche à la température de couleur intermédiaire (Tkr) suivant une certaine configuration de superposition où est formée ladite tâche d'éclairement (2), et de modifier la dimension de ladite tâche d'éclairement (2) à ladite température intermédiaire (Tkr).

5. Appareil d'éclairage (1) selon l'une des revendications précédentes, **caractérisé en ce que** chaque source de lumière (6) laser comprend une ou plusieurs diodes lasers (8).

6. Appareil d'éclairage (1) selon l'une des revendications précédentes, **caractérisé en ce que** chaque élément phosphore (15) est intégré dans une férule (16) de fibre optique (9).

7. Appareil d'éclairage (1) selon la revendication 1, **caractérisé en ce que** chaque élément phosphore (15) est agencé sur une des faces d'une optique de vocalisation présente dans ladite tête d'éclairage (4).

8. Appareil d'éclairage (1) selon la revendication 3, **caractérisé en ce que** ledit moyen optique (14) est composé en partie ou intégralement par une lentille liquide à focale variable.

9. Appareil d'éclairage (1) selon la revendication 8, **caractérisé en ce que** ladite lentille liquide à focale variable est alimentée par un moyen d'alimentation électrique qui module un courant électrique de sorte de faire varier ladite focale.

10. Appareil d'éclairage (1) selon la revendication 9, **caractérisé en ce que** la variation de ladite focale de ladite lentille liquide à focale variable est apte à moduler l'angle du faisceau de lumière en sortie du système optique pour modifier la dimension de ladite tache d'éclairement (2) au niveau du champ opératoire.

## Patentansprüche

1. Operationsleuchte (1), umfassend mindestens zwei Lichtquellen (6a, 6b), einen Beleuchtungskopf (4), der von den Lichtquellen (6a, 6b) versetzt ist, und einen Lichtleiter in Form eines Geschirrs (11) aus optischen Fasern mit mindestens einem Kopfbündel (10a, 10b aus optischen Fasern, die mit den Lichtquellen (6a, 6b) gekoppelt sind, und einer Vielzahl von Ausgangsbündeln (9, 9a, 9b) aus optischen Fasern, die mit einer Vielzahl von Beleuchtungsausgängen (5) in dem Beleuchtungskopf (4) gekoppelt sind, um das Licht von den Lichtquellen (6a, 6b) zu dem Beleuchtungskopf (4) zu leiten, **dadurch gekennzeichnet, dass** das Geschirr (11) aus optischen Fasern zwei Kopfbündel (10a, 10b) umfasst und die Operationsleuchte (1) zwei Laserlichtquellen (6a, 6b) umfasst, die einen leuchtenden Laserstrahl emittieren, wobei die zwei Laserlichtquellen (6a, 6b) jeweils mit den zwei Kopfbündeln (10a, 10b) aus optischen Fasern gekoppelt sind, und dass ein erstes Phosphorelement eines ersten Typs (15) und ein zweites Phosphorelement eines zweiten Typs (15b) zwischen die Ausgangsbündel (9, 9a, 9b) aus optischen Fasern und die Beleuchtungsausgänge (5) derart eingefügt sind, dass man in jedem Beleuchtungsausgang (5) ein erstes Weißlichtbündel (F1) mit einer ersten Farbtemperatur (Tk1) und ein zweites Weißlichtbündel (F2) mit einer zweiten Farbtemperatur (Tk2), die von der ersten Farbtemperatur (Tk1) unterschiedlich ist, erzeugt.

2. Operationsleuchte (1) nach Anspruch 1 **dadurch gekennzeichnet, dass** sie ein elektrisches Versorgungsmittel (7) umfasst, das angepasst ist, um den zwei Lichtquellen (6a, 6b) jeweilige Ströme zu liefern, die eine unterschiedliche Stärke haben, so dass die Beleuchtungsausgänge ein Weißlicht mit variabler Farbtemperatur erzeugen.

3. Operationsleuchte (1) nach Anspruch 2, **dadurch gekennzeichnet, dass** ein optisches Mittel (14) in dem Beleuchtungskopf (4) eingerichtet ist, um mit dem Weißlicht einen Beleuchtungsfleck (30) auf einem Operationsfeld zu bilden.

4. Operationsleuchte (1) nach Anspruch 3, **dadurch gekennzeichnet, dass** das optische Mittel außerdem einen Bündelteiler (17) umfasst, um das erste Weißlichtbündel (F1) mit der ersten Farbtemperatur (Tk1) und das zweite Weißlichtbündel (F2) mit der zweiten Farbtemperatur (Tk2) in ein übertragenes Lichtbündel (F11, F21) und ein reflektiertes Lichtbündel (F12, F22) derart zu teilen, dass die zwei Weißlichtbündel (F1, F2) mit unterschiedlicher Farbtemperatur (Tk1, Tk2) gemischt werden, um zwei Weißlichtbündel (FR1, FR2) mit derselben Zwischenfarbtemperatur (Tkr) zwischen der ersten und der zweiten Farbtemperatur zu bilden, wobei es das optische Mittel (14) erlaubt, die Weißlichtbündel mit der Zwischenfarbtemperatur (Tkr) gemäß einer bestimmten Überlagerungskonfiguration zu kombinieren, wobei der Beleuchtungsfleck (2) gebildet wird, und die Dimension des Beleuchtungsflecks (2) auf die Zwischentemperatur (Tkr) zu ändern.

5. Operationsleuchte (1) nach einem der vorhergehenden Ansprüche, **dadurch gekennzeichnet, dass** jede Laserlichtquelle (6) eine oder mehrere Laserdioden (8) umfasst.

6. Operationsleuchte (1) nach einem der vorhergehenden Ansprüche, **dadurch gekennzeichnet, dass** jedes Phosphorelement (15) in eine Muffe (16) einer optischen Faser (9) integriert ist.

7. Operationsleuchte (1) nach Anspruch 1, **dadurch gekennzeichnet, dass** jedes Phosphorelement (15) auf einer der Seiten einer Fokussierungsoptik, die in dem Beleuchtungskopf (4) vorhanden ist, eingerichtet ist.

8. Operationsleuchte (1) nach Anspruch 3, **dadurch gekennzeichnet, dass** das optische Mittel (14) zum Teil oder vollständig aus einer Flüssiglinse mit variabler Brennweite besteht.

9. Operationsleuchte (1) nach Anspruch 8, **dadurch gekennzeichnet, dass** die Flüssiglinse mit variabler Brennweite durch ein elektrisches Versorgungsmittel versorgt wird, das einen elektrischen Strom derart moduliert, dass die Brennweite variiert wird.

10. Operationsleuchte (1) nach Anspruch 9, **dadurch gekennzeichnet, dass** die Variation der Brennweite der Flüssiglinse mit variabler Brennweite geeignet ist, um den Winkel des Lichtbündels am Ausgang des optischen Systems zu modulieren, um die Dimension des Beleuchtungsflecks (2) im Bereich des Operationsfelds zu ändern.

## Claims

1. An operative lighting apparatus (1) comprising at least two light sources (6a, 6b), a lighting head (4) remote of said light sources (6a, 6b) and a light guide in the form of harness (11) of optical fibers with at least one head bundle (10a, 10b) of optical fibers coupled to said light sources (6a, 6b) and a plurality of output bundles (9, 9a, 9b) of optical fibers coupled to a plurality of lighting outlet (5) in said lighting head (4) for conducting light from said light sources (6a, 6b) to said lighting head (4), **characterized in that** said harness (11) of optical fibers comprises two head bundles (10a, 10b) and said lighting apparatus (1) comprises two laser light sources (6a, 6b) emitting a laser light beam, said two laser light sources (6a, 6b) being respectively coupled to said two head bundles (10a, 10b) of optical fibers, and **in that** a first phosphor element of a first type (15a) and a second phosphor element of a second type (15b) are interposed between said output bundles (9, 9a, 9b) of optical fibers and said lighting outlets (5), so that in each lighting outlet (5) a first beam of white light (F1) at a first color temperature (Tk1) and a second beam of white light (F2) at a second color temperature (Tk2) different from the first color temperature (Tk1) are produced.

2. A lighting apparatus (1) according to claim 1, **characterized in that** it comprises an electrical power supply means (7) adapted to power said two light sources (6a, 6b) with respective different currents so that the lighting outlets produce white light with variable color temperature.

3. A lighting apparatus (1) according to claim 2, **characterized in that** an optical means (14) is arranged in said lighting head (4) to form with said white light an illumination spot (30) on an operative field.

4. A lighting apparatus (1) according to claim 3, **characterized in that** said optical means further comprises a beam splitter (17) for splitting said first beam of white light (F1) at said first color temperature (Tk1) and said second beam of white light (F2) at said second color temperature (Tk2) into a transmitted light beam (F11, F21) and a reflected light beam (F12, F22) so that said two beams of white light (F1, F2) of different color temperature (Tk1, Tk2) are mixed to form two beams of white light (FR1, FR2) at said same intermediate color temperature (Tkr) between said first and second color temperature, said optical means (14) allows to combine the white light beams at the intermediate color temperature (Tkr) in a certain superposition configuration where said illumination spot (2) is formed, and to modify the size of said illumination spot (2) at said intermediate color temperature (Tkr).

5. A lighting apparatus (1) according to one of the preceding claims **characterized in that** each laser light source (6) comprises one or more laser diodes (8).

6. A lighting apparatus (1) according to one of the preceding claims, **characterized in that** each phosphor element (15) is embedded in a ferrule (16) of optical fiber (9).

7. A lighting apparatus (1) according to claim 1, **characterized in that** each phosphor element (15) is arranged on one side of a focusing optic presents in said lighting head (4).

8. A lighting apparatus (1) according to claim 3, **characterized in that** said optical means (14) is partly or wholly composed with a variable focus liquid lens.

9. A lighting apparatus (1) according to claim 8, **characterized in that** said variable focus liquid lens is fed by an electrical power supply means which modulates an electric current so that to vary said focal length.

10. A lighting apparatus (1) according to claim 9, **characterized in that** the variation of said focal length of said variable focus liquid lens is suitable for modulating the angle of the light beam leaving the optical system to modify the size of said illumination spot (2) at the level of the operative field.
